# EUROPÄISCHE PATENTSCHRIFT

(11) **EP 3 811 475 B1**
(45) Veröffentlichungstag und Bekanntmachung des Hinweises auf die Patenterteilung: **30.08.2023**
(21) Anmeldenummer: 19746037.1
(22) Anmeldetag: 18.07.2019
(51) Int. Cl.: H02B 13/035, H02B 5/06

(54) **MEHRPHASIGE SCHALTANLAGE**
MULTIPHASE SWITCHGEAR
APPAREILLAGE DE COMMUTATION MULTIPHASÉ

(30) Priorität: 17.08.2018 DE 102018213934
(43) Veröffentlichungstag der Anmeldung: 28.04.2021
(73) Patentinhaber: Siemens Energy Global GmbH & Co. KG, 81739 München (DE)
(72) Erfinder: BEUTEL, Stefan, 10555 Berlin (DE); HALM, Christian, 10439 Berlin (DE); KLEINSCHMIDT, Andreas, 16515 Oranienburg (DE)
(86) Internationale Anmeldenummer: PCT/EP2019/069325
(87) Internationale Veröffentlichungsnummer: WO 2020/035254

(56) Entgegenhaltungen:
- EP-A1- 0 005 208
- EP-A2- 0 875 971
- FR-A1- 2 684 246
- US-B1- 6 515 247

## Beschreibung

Die Erfindung betrifft eine mehrphasige Schaltanlage mit einem Schaltfeld aufweisend ein vertikales Eingangsgehäusemodul, welches über ein Quergehäusemodul mit einem vertikalen Schaltgehäusemodul verbunden ist, wobei das Eingangsgehäusemodul und das Schaltgehäusemodul in Richtung des Quergehäusemoduls voneinander beabstandet sind und das Eingangsgehäusemodul, das Quergehäusemodul und das Schaltgehäusemodul einen ersten Phasenblock bilden.

Aus dem US-Patent US 4,774,628 geht eine mehrphasige Schaltanlage mit einem Schaltfeld hervor. Das dortige Schaltfeld verfügt über ein vertikales Eingangsgehäusemodul sowie über ein vertikales Schaltgehäusemodul. Das Eingangsgehäusemodul sowie das Schaltgehäusemodul sind über ein Quergehäusemodul miteinander verbunden und in Richtung des Quergehäusemodules voneinander beabstandet. Das Eingangsgehäusemodul, das Quergehäusemodul und das Schaltgehäusemodul bilden einen ersten Phasenblock. Das bekannte mehrphasige Schaltfeld weist eine kompakte Bauweise auf. Dadurch ist es möglich, eine Vielzahl von Schaltfeldern nebeneinander zu positionieren, wobei die Tiefe begrenzt ist. Die Kompaktheit weist jedoch auch den Nachteil auf, dass Service- und Wartungsarbeiten nur erschwert vorzunehmen sind. Des Weiteren erfordern aufgrund des hohen Integrationsgrades Sonderausführungen jeweils Sondergehäusemodule, wodurch Gestehungskosten unnötig vergrößert werden.

Der europäischen Patentanmeldung EP 0 005 208 A1 ist ein elektrisches Schaltfeld entnehmbar. Eine Metallkapselung umschließt pro Phase mindestens eine Vakuumschaltröhre, welche einerseits mit einem Kabelanschluss und andererseits über eine flexible Leitung mit einem Trennschalter in Verbindung steht. Bezüglich einer Vertikalen sind die Vakuumschaltröhre, der Kabelanschluss sowie der Trennschalter hintereinander fluchtend angeordnet, so dass je Phase eines Feldes eine vertikale Abfolge vorliegt. Oberhalb der vertikal übereinander angeordneten Elemente ist ein querliegender Behälter vorgesehen, an welchen sich ein Behälter eines weiteren Feldes anschließen kann. Aufgrund der vertikalen Ausrichtung jeder Phase eines Feldes kann zwar eine kompakte Struktur erzielt werden, jedoch ist die Variabilität hinsichtlich der Ausgestaltung und Verwendung eingeschränkt. Der europäischen Patentanmeldung EP 0 875 971 A2 ist eine Hochspannungsschaltanlage entnehmbar, die einen Schalter mit einem metallischen Kapselungsgehäuse aufweist. An der Auspuffseite eines Schaltpoles des Schalters sind am Gehäuse zwei übereinander angeordnete Flanschstutzen vorgesehen, die dem Anschluss von Sammelschienen oder irgendeinem anderen Stromanschluss dienen. Dem Dokument FR 2 684 246 A1 ist eine gasisolierte Schaltanlage entnehmbar, welche einen Leistungsschalter für drei parallel angeordnete Phasen eines Feldes aufweist. Um eine kompakte Bauform zu erzielen, ist vorgeschlagen, Baugruppen wie Stromwandler benachbarter Phasen versetzt zueinander anzuordnen bzw. Abzweige von Leistungsschaltern in voneinander abweichenden Höhen anzuordnen. So ist die Möglichkeit gegeben, Gehäuse der verschiedenen Phasen eines Feldes einander anzunähern, wobei jedoch die Anzahl von verschiedenartig geformten Baugruppen erhöht und die Anzahl von Gleichteilen reduziert wird.

Somit ergibt sich als Aufgabe der Erfindung eine mehrphasige Schaltanlage mit einem Schaltfeld anzugeben, welche bei kompakten Abmessungen eine vergrößerte Anzahl von mehrfach nutzbaren Gehäusemodulen aufweist.

Erfindungsgemäß wird die Aufgabe bei einer mehrphasigen Schaltanlage mit einem Schaltfeld der eingangs genannten Art dadurch gelöst, dass mehrere Phasenblöcke in Richtung des Quergehäuses hintereinander liegend angeordnet sind.

Ein Schaltfeld ist ein Teil einer Elektroenergieübertragungseinrichtung. Mittels einer Schaltanlage ist es möglich, Schalthandlungen innerhalb eines Elektroenergieübertragungsnetzes durchzuführen. Als solches weist ein Schaltfeld zumindest eine Unterbrechereinheit eines elektrischen Schaltgerätes auf. Ein mehrphasiges Schaltfeld dient dabei einem Einsatz in einem mehrphasigen Elektroenergieübertragungssystem. Ein mehrphasiges Schaltfeld kann beispielsweise ein dreiphasiges Elektroenergieübertragungssystem übertragen. So ist es beispielsweise bekannt, ein dreiphasiges Wechselspannungssystem zu verwenden, wobei die Spannungen in jeder der drei Phasen zeitlich variieren, wobei ein zeitlicher Versatz innerhalb der drei Phasen vorliegt. In Summe ergeben sich bei einem dreiphasigen Elektroenergieübertragungssystem sämtliche Spannungen der jeweiligen Phasen zu einem Zeitpunkt zu einem Betrag Null. So kann beispielsweise eine der Phasen einen positiven Betrag aufweisen, wohingegen die beiden anderen Phasen einen negativen Betrag aufweisen, der in Summe den positiven Betrag jedoch mit entgegengesetztem Vorzeichen entspricht.

Mehrere Schaltfelder können untereinander verbunden sein, so dass eine Schaltanlage mit mehreren Schaltfeldern gebildet ist. So können durch eine Aneinanderreihung mehrerer mehrphasiger Schaltfelder mehrere Eingänge der jeweiligen Schaltfelder insbesondere über ein Schaltgehäusemodul miteinander elektrisch kontaktiert oder voneinander getrennt werden. Dazu können jeweils mehrere Schaltfelder über sogenannte Sammelschienengehäusemodule einen Verbund aufweisen. Ein Sammelschienengehäusemodul kann einen Ausgang an einem Phasenblock bilden. Über ein Sammelschienengehäusemodul können Phasenblöcke mehrerer Schaltfelder miteinander verbunden sein.

Vorteilhaft kann eine mehrphasige Schaltanlage bzw. ein Schaltfeld mit einer einpoligen Isolation versehen sein. Das heißt, jede der mehreren Pole/Phasen wird von einer Isolation elektrisch gegenüber der Umgebung isoliert, die unabhängig von den anderen Isolationen der weiteren Pole/Phasen eine elektrisch isolierende Funktion übernimmt.

Beispielsweise kann es sich bei der mehrphasigen Schaltanlage um eine Schaltanlage mit Fluidisolation handeln, wobei die Phasenleiter jeweils separiert von einem elektrisch isolierenden Fluid umspült sind. Das elektrisch isolierende Fluid isoliert den jeweils umspülten Pol/Phasenleiter der mehrphasigen Schaltanlage. Um ein Verflüchtigen des elektrisch isolierenden Fluides zu verhindern, kann die Schaltanlage ein Kapselungsgehäuse aufweisen, welches das elektrisch isolierende Fluid einhaust. Dabei ist jeder der Phasenleiter der jeweiligen Phase/des jeweiligen Poles (d. h. die elektrisch leitenden Elemente, die jeweils mit demselben elektrischen Potenzial betrieben sind) von einem Fluidvolumen umspült, das von den Fluidvolumina der anderen verbleibenden Phasen/Pole separiert ist. Zur Separation können die Phasenleiter jeweils in einem separaten Gehäusemodul des Kapselungsgehäuses untergebracht sein. Vorteilhaft kann dabei vorgesehen sein, dass bei einer mehrphasigen Ausführung eines Schaltfeldes für verschiedene Phasen/Pole bauartgleiche Gehäusemodule Verwendung finden. Das elektrisch isolierende Fluid kann gasförmig und/oder flüssig vorliegen.

Ein Gehäusemodul ist dabei typischerweise mit einer hohlzylindrischen Grundstruktur versehen und weist eine Längsachse auf, welche im Wesentlichen der Hohlzylinderachse entspricht bzw. parallel zur Hohlzylinderachse ausgerichtet ist. Bevorzugt weist ein Gehäusemodul zumindest eine Schnittstelle auf, um mit weiteren Gehäusemodulen verbunden werden zu können. Eine derartige Schnittstelle kann bevorzugt in Form eines Flansches ausgebildet sein, so dass insbesondere ein reversibles Verbinden verschiedener Flansche verschiedener Gehäusemodule ermöglicht ist. Die Schnittstellen sind dabei bevorzugt auch dazu genutzt, um im Innern eines Gehäusemodules angeordnete Phasenleiter in das jeweilige Gehäusemodul ein- bzw. auszuleiten oder in andere Gehäusemodule übertreten zu lassen. Die Phasenleiter sind dabei gegenüber dem Gehäusemodul elektrisch isoliert zu stützen. Bevorzugt kann eine Stützung im Bereich der Flansche des jeweiligen Gehäusemodules vorgesehen sein. Beispielsweise kann ein Stützisolator in eine Flanschverbindung zwischen zwei Gehäusemodulen eingefügt sein, so dass der Phasenleiter die Schnittstelle möglichst zentrisch durchsetzen kann. Insbesondere bei Verwendung von kreisrunden Flanschen kann ein Phasenleiter zentrisch im Flansch positioniert sein. Ein Stützisolator kann beispielsweise eine Scheibenform aufweisen, welche korrespondierend zum Querschnitt der jeweiligen Schnittstellen ausgeformt ist. Bei Verwendung eines Kreisringflansches kann der Stützisolator eine korrespondierende Kreisfläche aufweisen und in eine Flanschverbindung eingelegt werden, wobei unter Zwischenlage des Stützisolators die Flansche miteinander verbunden werden. Im Bereich der Schnittstelle kann ein fluiddichter Abschluss des jeweiligen Gehäusemodules vorgesehen sein. Dabei kann der fluiddichte Abschluss derart ausgebildet sein, dass durch diese fluiddichte Barriere der Phasenleiter elektrisch isoliert hindurchgeführt wird. Dazu können beispielsweise scheibenförmige Stützisolatoren eingesetzt werden, welche eine Schnittstelle, insbesondere einen Flansch fluiddicht überspannen und die Flanschfläche fluiddicht abschließen. Es kann jedoch auch vorgesehen sein, dass im verflanschten Zustand zweier Gehäusemodule ein Übertritt von elektrisch isolierendem Fluid, insbesondere Isoliergas zwischen den einzelnen Gehäusemodulen durch die Flanschverbindung hindurch zugelassen wird. Dazu kann beispielsweise im Phasenleiter oder in einem Stützisolator ein entsprechender Kanal vorgesehen sein.

Die Anordnung von entsprechenden Schnittstellen, insbesondere von Flanschen an einem Gehäusemodul ist bevorzugt stirnseitig vorzusehen. Es kann jedoch auch vorgesehen sein, dass mantelseitig eine Schnittstelle angeordnet ist, um weitere Baugruppen mit dem jeweiligen Gehäusemodul zu verbinden. Ein Gehäusemodul umfasst jeweils ein Gehäuse, welches in seinem Innern ein elektrisch isolierendes Fluid abgrenzen kann, sowie einen zumindest abschnittsweise im Innern des Gehäusemodules angeordneten Phasenleiter, der über das elektrisch isolierende Fluid elektrisch isoliert werden kann. Als elektrisch isolierende Fluide eignen sich beispielsweise fluorhaltige Medien wie Schwefelhexafluorid, Fluornitril, Fluorketon usw. Es können jedoch auch Stickstoff- und Sauerstoff-haltige Medien verwendet werden. Bedarfsweise kann das Isoliermedium gasförmig im Innern der jeweiligen Gehäusemodule vorliegen. Es kann jedoch auch vorgesehen sein, dass zumindest Teile des Isoliermediums innerhalb eines Gehäusemodules in einer verflüssigten Form vorliegen. Die im Innern des jeweiligen Gehäusemodules vorliegenden Medien können bevorzugt auch unter Überdruck gesetzt werden, um die Isolationsfestigkeit des Isoliermediums entsprechend zu erhöhen.

Durch die Anordnung mehrerer Phasenblöcke in Richtung des Quergehäuses hintereinanderliegend besteht weiterhin die Möglichkeit, ein mehrphasiges Schaltfeld modulartig vorzufertigen, d. h. die mehreren Phasenblöcke in Richtung der Querachse hintereinanderliegend und winkelstarr zueinander auszurichten. Bei einem Hintereinanderliegen mehrerer Phasenblöcke folgen diese aufeinander in Richtung der Querachse des Quergehäuses. Alternativ kann auch vorgesehen sein, dass jeweils die gleichen Phasenblöcke mehrerer Schaltfelder einer Schaltanlage, die parallel zueinander angeordnet sind, zu einer Montageeinheit zusammengefasst werden, so dass jeweils gleichartige Phasenblöcke eines ersten sowie eines zweiten Schaltfeldes winkelstarr miteinander verbunden sind und als Montageeinheit verschifft werden können. Bevorzugt können die Phasenblöcke eines Schaltfeldes, die jeweils der Übertragung verschiedener Phasen dienen, gleichartig ausgeführt sein. Dadurch kann ein hoher Vorfertigungsgrad erzielt werden. Bevorzugt erstrecken sich Hohlzylinderachsen des Schaltgehäusemoduls und des Eingangsgehäusemoduls in einer Vertikalen parallel zueinander. Das Quergehäusemodul bildet eine Brücke. Bevorzugt kann das Quergehäusemodul jeweils mantelseitig (ggf. über ein Knie oder Kreuzbaustein) mit dem Schaltgehäusemodul und dem Eingangsgehäusemodul verbunden (z. B. verflanscht) sein. Das Eingangsgehäusemodul bildet einen Zugang zu dem/der jeweiligen Pol/Phase des Schaltfeldes. Das Schaltgehäusemodul dient einem Schalten des Eingangsgehäusemoduls und einem Verbund mehrerer Schaltfelder einer Schaltanlage. Durch ein Schalten des Eingangsgehäusemodules kann der gesamte Phasenblock zu- bzw. abgeschaltet werden. Am Eingangsgehäusemodul können beispielsweise Kabel, Freileitungen usw. angeschlossen sein. Der Verbund der Schaltfelder einer Schaltanlage kann mittels eines Sammelschienemoduls erfolgen. Dazu kann ein Sammelschienenmodul mit dem Schaltgehäusemodul verbunden sein. Das Schaltmodul kann so einen Ausgang des Phasenblockes über ein Sammelschienenmodul bilden.

Eine weitere vorteilhafte Ausgestaltung kann vorsehen, dass die Phasenblöcke im Wesentlichen gleichartig aufgebaut sind.

Ein Phasenblock bietet jeweils die Möglichkeit, in einer Phase eines mehrphasigen Systems eine bestimmte Schalthandlung bzw. eine Stromverteilung vorzunehmen. Mehrere Phasenblöcke können als Schaltfeld zusammengefasst werden, so dass Schalthandlungen bzw. eine Stromverteilung in allen Phasen synchron erfolgen kann. Bei Verwendung eines mehrphasigen Elektroenergieübertragungssystems kann jeder der Phasenblöcke einem Schalten bzw. Übertragen der Phasen des Elektroenergieübertragungssystems dienen. Durch die Nutzung von im Wesentlichen gleichartig aufgebauten Phasenblöcken kann ein synchrones bzw. abgestimmtes Schalten bzw. Übertragen der Phasen in den jeweiligen Phasenblöcken vorgenommen werden. Weiterhin können für den Aufbau der Phasenblöcke beispielsweise gleichartige Eingangsgehäusemodule, Quergehäusemodule sowie Schaltgehäusemodule verwendet werden. Darüber hinaus können auch weitere Gehäusemodule einen gleichartigen Aufbau aufweisen. Beispielsweise können Stromwandlergehäusemodule, Spannungswandlergehäusemodule, Trennschaltergehäusemodule, Erdungsschaltergehäusemodule, Sammelschienengehäusemodule usw. an den einzelnen Phasenblöcken gleichartig ausgeführt sein. Vorteilhafterweise kann weiter vorgesehen, dass mehrere Phasenblöcke parallel zum Quergehäuse angeordnet sind.

Neben einer Anordnung mehrerer Phasenblöcke hintereinander in Richtung des Quergehäuses in einem mehrphasigen Schaltfeld kann vorgesehen sein, dass mehrere Phasenblöcke parallel zum Quergehäuse angeordnet sind. Somit können insbesondere mehrere Schaltfelder parallel zum Quergehäuse angeordnet werden, wobei die jeweiligen Phasenblöcke parallel zueinander angeordnet sind. Dabei sind bevorzugt die Phasenblöcke der jeweils gleichen Phase der mehrphasigen Schaltanlage unmittelbar nebeneinander liegend angeordnet. Dadurch kann ein Schaltanlagen-Schaltfeld mit im Wesentlichen rechteckiger Grundfläche aufgebaut werden, welches sowohl parallel zum Quergehäuse als auch in Richtung des Quergehäuses hintereinanderliegend jeweils mehrere Phasenblöcke aufweist. Insbesondere die in Richtung des Quergehäuses hintereinander liegenden angeordneten Phasenblöcke des jeweiligen Schaltfeldes können identisch ausgeführt sein.

Eine weitere vorteilhafte Ausgestaltung kann vorsehen, dass stirnseitig am Schaltgehäusemodul, insbesondere vom Schaltgehäusemodul überdeckt, ein Sammelschienengehäusemodul angeordnet ist.

Ein Schaltgehäusemodul ist im Wesentlichen vorteilhaft in einer Vertikalen ausgerichtet, wobei sich die vertikale Ausrichtung auf eine Hohlzylinderachse eines Schaltgehäusemodules bezieht. Das Schaltgehäusemodul nimmt in seinem Innern eine Unterbrechereinheit (einer Phase/eines Poles) eines elektrischen Schaltgerätes auf. Dieses elektrische Schaltgerät weist bevorzugt relativ zueinander bewegbare Schaltkontaktstücke auf, wobei eine Relativbewegung zwischen den Schaltkontaktstücken zu erzeugen ist. Bei mehrphasiger Ausführung des Schaltgerätes verteilen sich die Unterbrechereinheiten auf mehrere Phasenblöcke eines Schaltfeldes (z. B. in Richtung des Quergehäusemodules hintereinander liegend).

Um eine entsprechende Verteilung einer zu- und abgeführten elektrischen Energie über ein Eingangsgehäusemodul zum Schaltgehäusemodul zwischen verschiedenen Schaltfeldern vorzunehmen, kann mittels eines Sammelschienengehäusemodules ein Verbund von parallel zum Quergehäuse angeordneten Phasenblöcken vorgenommen werden. Somit ist es möglich, über ein Sammelschienengehäusemodul eine Verteilung bzw. Aufteilung eines Energieflusses zwischen verschiedenen Schaltfeldern einer mehrphasigen Schaltanlage vorzunehmen. Das Sammelschienengehäusemodul weist dazu bevorzugt einen Phasenleiter (Sammelschiene) auf, welcher quer zu den hintereinander liegenden mehreren Phasenleiterblöcken eines Schaltfeldes ausgerichtet ist. Dabei sind die Phasenleiter innerhalb eines Sammelschienengehäuses des Sammelschienengehäusemodules untergebracht und dort elektrisch isoliert durch ein elektrisch isolierendes Medium, insbesondere ein Fluid, gelagert. Ein Sammelschienengehäusemodul kann entsprechend eine Schnittstelle (Flansch) aufweisen, so dass das Sammelschienengehäusemodul mit verschiedenen weiteren Gehäusemodulen verbindbar ist. Durch die Anordnung eines Sammelschienengehäusemodules stirnseitig an einem Schaltgehäusemodul kann eine effiziente Nutzung des Bauraumes am Schaltgehäusemodul vorgenommen werden. So ist zum einen die Möglichkeit gegeben, das Sammelschienengehäusemodul beispielsweise vom Schaltgehäusemodul überdeckt an einer Stirnseite zu positionieren. Bei einer vertikalen Aufstellung kann das Sammelschienengehäusemodul nur zumindest teilweise unterhalb des Schaltgehäusemoduls positioniert werden. Entsprechend können weitere Bauteile wie beispielsweise Antriebseinrichtungen an geeigneteren Positionen am Schaltgehäusemodul positioniert werden. Das Sammelschienengehäusemodul ist somit tiefliegend an einer mehrphasigen Schaltanlage gelagert.

Eine weitere vorteilhafte Ausgestaltung kann vorsehen, dass mantelseitig am Schaltgehäusemodul ein Sammelschienengehäusemodul angeordnet ist.

Eine mantelseitige Positionierung eines Sammelschienengehäusemodules am Schaltgehäusemodul ermöglicht es, eine sogenannte Doppelsammelschiene auszubilden. D. h. an einem ausgangsseitgen Ende des Schaltgehäusemodules bzw. auf einer Seite der im Schaltgehäusemodul angeordneten Unterbrechereinheit kann wahlweise abwechselnd oder zeitgleich eine Verteilung eines Strompfades auf ein erstes Sammelschienengehäusemodule sowie ein zweites Sammelschienengehäusemodul vorgenommen werden. Dabei kann zumindest eines der Sammelschienengehäusemodule stirnseitig und das andere Sammelschienengehäusemodul mantelseitig am Schaltgehäusemodul gelagert sein. Eine Positionierung der Sammelschienengehäusemodule am Schaltgehäusemodul kann dabei unmittelbar, d. h. beispielsweise durch ein unmittelbares Verflanschen von Schaltgehäusemodul und Sammelschienengehäusemodul vorgenommen werden. Es kann jedoch auch vorgesehen sein, dass ein mittelbarer Verbund zwischen Sammelschienengehäusemodul und Schaltgehäusemodul vorgenommen wird. So kann beispielsweise mantelseitig ein Zwischenschalten beispielsweise eines Knies oder eines Winkelerders usw. zwischen den Gehäusemodulen vorgesehen sein. Eine mantelseitige Anordnung eines Sammelschienengehäusemodules ermöglicht darüber hinaus insbesondere bei einem mittelbaren Verflanschen über ein Gehäusemodul mit Abzweig auch ein Positionieren eines dritten Sammelschienengehäusemodules an einem Schaltgehäusemodul, so dass eine sogenannte Dreifachsammelschiene gebildet sein kann. Entsprechend kann am Schaltgehäusemodul ein Sammelschienengehäusemodul stirnseitig und die beiden anderen Sammelschienengehäusemodule mantelseitig verflanscht werden, so dass mantelseitig angeordnete Sammelschienengehäusemodule, beispielsweise unterhalb des Quergehäuses, von dem Quergehäuse überbrückt werden. So ist eine effiziente Nutzung des Bauraumes an einem Schaltfeld gegeben. Auch bei der Verwendung einer mantelseitigen Anordnung eines Sammelschienengehäusemodules kann dieses derart positioniert sein, dass durch das Quergehäuse ein Überspannen des Sammelschienengehäusemodules erfolgt.

Eine weitere vorteilhafte Ausgestaltung kann vorsehen, dass an einem frontseitigen Schaltgehäusemodul eine Antriebseinrichtung angeordnet ist, wobei die Antriebseinrichtung an Unterbrechereinheiten von in Richtung des Quergehäuses hintereinander liegenden Schaltgehäusemodulen gekoppelt ist.

Die hintereinander liegenden Phasenblöcke sind aufgrund ihrer achsgleichen Ausrichtung des Quergehäuses bei einer z. B. dreiphasigen Schaltanlage in ein frontseitiges Schaltgehäusemodul und ein rückseitiges Schaltgehäusemodul unterteilt, wodurch sich ein frontseitiger Phasenblock sowie ein rückseitiger Phasenblock einstellt, wobei zwischen frontseitigem und rückseitigem Phasenblock ein mittlerer Phasenblock angeordnet ist. Entsprechend ergibt sich ein frontseitiges Schaltgehäusemodul, dem eine Antriebseinrichtung zugeordnet ist. Die Antriebseinrichtung dient dabei einer Erzeugung einer Relativbewegung zwischen Schaltkontaktstücken der Unterbrechereinheiten der Schaltgehäusemodule. Die Unterbrechereinheiten sind innerhalb der Schaltgehäusemodule positioniert und dort elektrisch isoliert angeordnet. Über eine Unterbrechereinheit ist ein Auftrennen bzw. ein Ausbilden eines Strompfades innerhalb eines Phasenleiterzuges, hier innerhalb eines Phasenleiterzuges der jeweiligen Phase des jeweiligen Phasenblockes, vorgesehen. Eine Antriebseinrichtung kann einem Antreiben mehrerer Unterbrechereinheiten, insbesondere mehrerer funktionsgleicher Unterbrechereinheiten in verschiedenen Phasenblöcken dienen. Eine entsprechende Koppelung kann über eine kinematische Kette erfolgen.

Es kann jedoch auch vorgesehen sein, dass jeweils zu einer Unterbrechereinheit eine separate Antriebseinrichtung zugeordnet ist (Single-Pol-Antriebe).

Zur Erzeugung der Relativbewegung von relativ zueinander bewegbaren Schaltkontaktstücken einer Unterbrechereinheit eines Schaltgehäusemodules ist eine Antriebseinrichtung vorgesehen, die eine entsprechende Antriebsenergie bereitstellt. Um sicherzustellen, dass die Unterbrechereinheiten der in Richtung des Quergehäuses hintereinander liegenden Phasenblöcke bzw. Schaltgehäusemodule eine abgestimmte synchronisierte Bewegung vollziehen können, kann die Antriebseinrichtung, welche am frontseitigen Schaltgehäusemodul angeordnet ist, auch zu einer Einkopplung einer Bewegung auf die Unterbrechereinheiten der in Richtung des Quergehäuses hintereinander liegenden Schaltgehäusemodule vorgesehen sein. Die Antriebseinrichtung kann dabei aufgrund der frontseitigen Positionierung einfach montiert werden und ist im Wartungsfalle einfach zugänglich. Eine Anbindung der Unterbrechereinheiten an die Antriebseinrichtung kann bevorzugt über ein Gestänge oder eine andere kinematische Kette erfolgen, die im Wesentlichen in Richtung des Quergehäuses eine Schaltbewegung zu den einzelnen Schaltgehäusemodulen der Phasenblöcke überträgt. Die der Übertragung der Bewegung dienende kinematische Kette kann stirnseitig oder mantelseitig in das Schaltgehäusemodul eingeführt werden.

Weiterhin kann vorteilhaft vorgesehen sein, dass an einem frontseitigen Schaltgehäusemodul eine Antriebseinrichtung angeordnet ist, welche das Schaltgehäusemodul zumindest teilweise überdeckt.

Ein teilweises Überdecken sollte an einer Stirnseite des Schaltgehäusemodules erfolgen. Bevorzugt kann bei einer vertikalen Ausrichtung des Schaltgehäusemodules die Antriebseinrichtung oberhalb des Schaltgehäusemodules positioniert sein und dort eine Überdeckung des Schaltgehäusemodules zumindest teilweise vornehmen. Dadurch ist durch die Antriebseinrichtung ein mechanischer Schutz des darunter liegenden Schaltgehäusemodules gegeben. Zum anderen steht die andere (z. B. untere) Seite des Schaltgehäusemodules frei, um dort beispielsweise Sammelschienengehäusemodule für eine Einfach-, Doppel- oder Dreifach-Sammelschienen-Ausführung zu positionieren. Entsprechend kann die Kompaktheit der mehrphasigen Schaltanlage weiter erhöht werden. Weiterhin ist eine vereinfachte Zugänglichkeit der Antriebseinrichtung ermöglicht und eine Einkoppelung einer Bewegung auf anzutreibende Schaltkontaktstücke vereinfacht möglich.

Eine weitere vorteilhafte Ausgestaltung kann vorsehen, dass am Schaltgehäusemodul und/oder am Quergehäusemodul und/oder am Eingangsgehäusemodul ein Erdungschaltermodul anordnet ist, welches von dem Quergehäusemodul überspannt ist.

Ein Erdungsschaltermodul dient einer Beaufschlagung eines Phasenleiters, der im Innern eines Schaltgehäusemodules und/oder eines Eingangsgehäusemodules und/oder eines anderen Gehäusemoduls positioniert ist, mit Erdpotenzial. Dazu wird ein bewegbares Schaltkontaktstück, welches z. B. dauerhaft Erdpotenzial führen kann, innerhalb des Schaltgehäuses bzw. des Eingangsgehäuses mit dem dort positionierten Phasenleiter elektrisch kontaktiert, so dass ein Erden des jeweiligen Phasenleiters im Schaltgehäuse bzw. im Eingangsgehäuse erfolgen kann. Ein Erdungsschaltermodul kann dazu bevorzugt mantelseitig an dem Schaltgehäusemodul und/oder am Eingangsgehäusemodul positioniert sein. Dabei ist die Bewegungsachse eines bewegbaren Schaltkontaktstückes eines Erdungsschaltermoduls bevorzugt parallel zur Richtung des Quergehäuses ausgerichtet. Bevorzugt können bei der Verwendung eines Erdungsschaltermodules sowohl am Schaltgehäusemodul als auch am Eingangsgehäusemodul die Erdungsschaltermodule fluchtend in Richtung des Quergehäuses hintereinander liegend angeordnet sein. Dabei kann insbesondere vorgesehen sein, dass ein Fluchten mit umgekehrtem Richtungssinn vorgesehen ist. Dadurch besteht die Möglichkeit, im vom Quergehäusemodul überspannten Bereich sowohl ein Erdungsschaltermodul für das Schaltgehäuse als auch für das Eingangsgehäuse zu positionieren. Somit ist beispielsweise der Bereich, welcher bei Anordnung eines mantelseitigen Sammelschienengehäusemodules genutzt wird, auch verwendet, um die Erdungsschaltermodule zu positionieren. Dadurch kann ein schmal bauendes Schaltfeld realisiert werden, welches in einer Überbrückung durch das Quergehäuse notwendige Anbauteile aufnimmt. Ein Erdungsschaltermodul kann beispielsweise über einen mantelseitigen Flansch am Schaltgehäusemodul bzw. Eingangsgehäusemodul positioniert sein und dabei ein relativ bewegbares Schaltkontaktstück innerhalb des vom Schaltgehäusemodul bzw. Eingangsgehäusemodul umschlossenen elektrisch isolierenden Fluides aufweisen.

Weiterhin kann vorteilhaft vorgesehen sein, dass am Schaltgehäusemodul und/oder am Eingangsgehäusemodul und/oder am Quergehäusemodul ein Erdungsschaltermodul angeordnet ist, welches sich oberhalb des Quergehäusemoduls erstreckt.

Eine Position für einen Erdungsschaltermodul kann auch am Schaltgehäusemodul und/oder am Eingangsgehäusemodul und/oder am Quergehäusemodul vorgesehen sein, wobei das Quergehäusemodul sich unterhalb des Erdungsschaltermodules erstreckt. In diesem Falle überspannt das Erdungsschaltermodul das Quergehäusemodul. Dies weist den Vorteil auf, dass die Position der Erdungsmöglichkeiten über das jeweilige Erdungsschaltermodul beispielsweise in der Nähe eines Trennschalters vorgenommen werden kann. Dadurch können mechanische Einwirkungen, wie sie beispielsweise beim Schalten eines Erdungsschaltermodules auftreten, von mechanisch anfälligeren Komponenten ferngehalten werden. Weiterhin kann der am jeweiligen Phasenblock befindliche Raum günstig genutzt werden, indem der unterhalb der/des Quergehäusemodules stehende Bauraum freigehalten wird. Dadurch ist beispielsweise die Verwendung z. B. dreier Sammelschienengehäusemodule möglich, die eine so genannte Dreifachsammelschiene ausbilden können.

Eine weitere vorteilhafte Ausgestaltung kann vorsehen, dass am Schaltgehäusemodul und/oder am Eingangsgehäusemodul und/oder am Quergehäusemodul ein Erdungsschaltermodul angeordnet ist, welches sich in der Ebene des Quergehäusemoduls erstreckt.

Das Quergehäusemodul beabstandet das Eingangsgehäusemodul sowie das Schaltgehäusemodul voneinander und definiert eine Querachse, in welcher mehrere Phasenblöcke hintereinander liegen können. Indem man den Erdungsschaltermodul in derselben Ebene des Quergehäuses positioniert, kann beispielsweise benachbarter Bauraum am Quergehäusemodul oder fluchtender Bauraum in Richtung der aufeinanderfolgenden Phasenblöcke zur Aufnahme eines Erdungsschaltermodules dienen. Das Quergehäusemodul sowie das Erdungsschaltermodul liegen in einer Ebene.

Eine weitere vorteilhafte Ausgestaltung kann vorsehen, dass eine Unterbrechereinheit eine Schaltstrecke eines Leistungsschalters bildet.

Eine Unterbrechereinheit kann eine Schaltstrecke eines Leistungsschalters bilden. Eine Schaltstrecke eines Leistungsschalters ist beispielsweise innerhalb eines Schaltgehäusemodules angeordnet. Dadurch ist die Möglichkeit gegeben, mittels der Unterbrechereinheit einen Strompfad eines Phasenblockes zwischen einem Eingangsgehäusemodul und insbesondere einem Ausgang eines Leistungsschalters eines Schaltgehäusemoduls beispielsweise durch ein Sammelschienengehäusemodul gebildet, zu unterbrechen bzw. zuzuschalten. Ein Leistungsschalter dient dabei einem Schalten von Nenn- und Kurzschlussströmen. Als Unterbrechereinheit eines Leistungsschalters können beispielsweise Selbstblasunterbrechereinheiten oder auch Vakuumschaltröhren Verwendung finden.

Eine weitere vorteilhafte Ausgestaltung kann vorsehen, dass eine Unterbrechereinheit eine Schaltstrecke eines Trennschalters bildet.

Ein Trennschalter dient einem stromlosen Schalten eines Phasenleiters. Bevorzugt wird ein Trennschalter als Sicherheitselement genutzt, um beispielsweise bei einem Versagen eines Leistungsschalters ein unerwünschtes Zuschalten innerhalb eines Phasenblockes zu verhindern. Ein Trennschalter kann dabei begrenzt Ströme schalten, die beispielsweise aufgrund von Ladungserscheinungen auftreten.

Ein Trennschalter kann beispielsweise an einem Abgang eines Schaltgehäusemodules vorgesehen sein. So ist beispielsweise über einem Trennschalter, welcher an einem Sammelschienengehäusemodul bzw. vor einem Sammelschienengehäusemodul positioniert ist, ein Zuschalten eines Sammelschienengehäusemodules auf ein Schaltgehäusemodul ermöglicht. Über eine wechselweise Auswahl eines Trennschalters bei Einfach-, Doppel- bzw. Dreifach-Sammelschienen kann ein Verteilen/Umschalten einer Ausgangsseite einer Unterbrechereinheit am Schaltgehäusemodul vorgenommen werden.

Weiterhin kann ein Trennschalter auch im Eingangsgehäusemodul positioniert sein, so dass ein Trennen des Eingangsgehäusemodules von der Eingangsseite des Schaltgehäusemodules (dort, wo das Quergehäusemodul, das Schaltgehäusemodul mit dem Eingangsgehäusemodul verbindet) vorzunehmen, wodurch eine Sicherheitsschaltung beispielsweise eines am Eingangsgehäusemodul angeschlossenen Kabels oder einer Freileitung vorgenommen werden kann.

Eine weitere vorteilhafte Ausgestaltung kann vorsehen, dass eine Unterbrechereinheit eine Schaltstrecke eines Erdungsschalters bildet.

Ein Erdungsschalter kann dazu dienen, freigeschaltete Phasenleiter mit Erdpotenzial zu beaufschlagen. Um dies in kompakter und zuverlässiger Form vornehmen zu können, ist eine Schaltstrecke eines Erdungsschalters bevorzugt an den entsprechenden Positionen, z. B. vor bzw. hinter einer Schaltstrecke eines Leistungsschalters bzw. vor oder hinter einer Schaltstrecke eines Trennschalters anzuordnen. Dazu eignen sich insbesondere mantelseitig anzuflanschende Erdungsschaltermodule, die bedarfsweise an den jeweiligen Gehäusemodulen eines Phasenblockes angeordnet sind.

Ein Erdungsschalter kann eine Unterbrechereinheit mit einem relativ zu einem zu erdenden Phasenleiter bewegbaren Schaltkontaktstück aufweisen, welches z. B. dauerhaft Erdpotenzial führt, und mit einem Einfahren beispielsweise in eine Buchse eine Kontaktierungsbuchse eines Phasenleiters ebenfalls diesen Phasenleiter mit Erdpotenzial beaufschlagt.

Eine weitere vorteilhafte Ausgestaltung kann vorsehen, dass Gehäusemodule über Schnittstellen, insbesondere Flansche mittelbar oder unmittelbar miteinander verbunden sind.

Einzelne Gehäusemodule sind über Schnittstellen miteinander verbindbar. Dadurch besteht die Möglichkeit, einen modularen Aufbau einer mehrphasigen Schaltanlage vorzunehmen und dabei eine Vielzahl von gleichartigen Gehäusemodulen zu verwenden. Als Schnittstelle eignen sich insbesondere bevorzugt Flansche mit Schraubverbindungen, so dass ein wiederholtes Öffnen und Schließen der Schnittstellen ermöglicht ist. Die Flansche können auch genutzt werden, um im Innern der jeweiligen Gehäusemodule elektrisch isoliert zu positionierende Phasenleiter abzustützen. Dazu können beispielsweise Scheibenisolatoren im Flanschverbund zweier Schnittstellen zweier Gehäusemodule angeordnet sein. Die Schnittstellen können weiter genutzt werden, um eine fluiddichte Barriere an einem Gehäusemodul auszubilden, so dass das jeweilige Gehäusemodul in seinem Innern ein elektrisch isolierendes Fluid hermetisch einschließen kann.

Eine weitere vorteilhafte Ausgestaltung kann vorsehen, dass über Schnittstellen eine Beabstandung von Schaltfeldern in Richtung der Tiefenachse erfolgt. Dazu können beispielsweise im Verlauf der Sammelschienenmodule so genannte Sammelschienendistanzmodule eingesetzt werden, welche zwischen Flanschen angeordnet sind. Dadurch wird eine Beabstandung der einzelnen Schaltfelder erzielt, wodurch eine Zugänglichkeit der Schaltfelder auch zwischen den Schaltfeldern möglich ist. Bevorzugt kann vorgesehen sein, dass jedes zweite Schaltfeld über die Nutzung von Sammschienendistanzmodulen zu einem benachbarten Schaltfeld beabstandet ist. Die Sammschienendistanzmodule ermöglichen einen fluiddichten Verbund der Schnittstellen und ein elektrisch isoliertes Führen der Phasenleiter der jeweiligen Sammelschienenmodule.

Ein Ausführungsbeispiel der Erfindung wird schematisch in einer Zeichnung gezeigt und nachfolgend näher beschrieben. Dabei zeigt die
- Figur 1: einen Schnitt durch ein Schaltfeld einer mehrphasigen Schaltanlage, die
- Figur 2: eine Seitenansicht des aus Fig. 1 bekannten Schaltfeldes, die
- Figur 3: eine Seitenansicht eines modifizierten Schaltfeldes und die
- Figur 4: eine frontseitige Ansicht einer mehrphasigen Schaltanlage mit sechs Schaltfeldern.

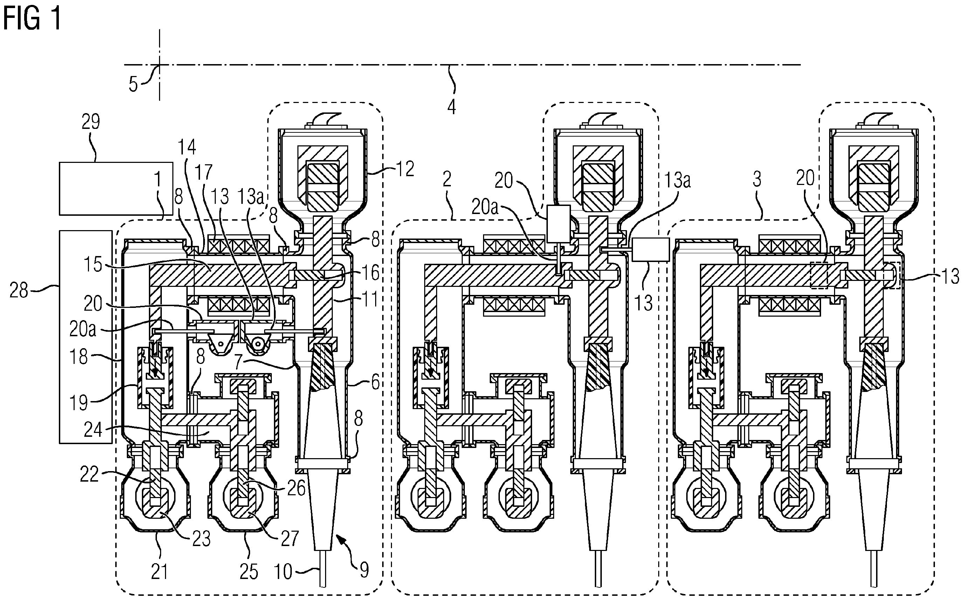

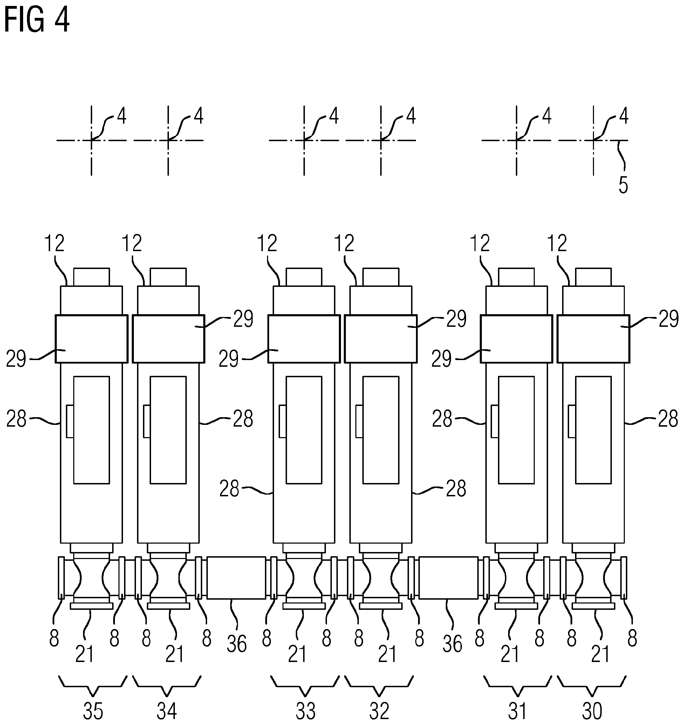

Die Figur 1 zeigt eine Seitenansicht eines Schaltfeldes einer mehrphasigen Schaltanlage im Schnitt. Dabei weist das Schaltfeld einen ersten Phasenblock 1, einen zweiten Phasenblock 2 sowie einen dritten Phasenblock 3 auf. Die drei Phasenblöcke 1, 2, 3 sind jeweils gleichartig aufgebaut und sind in einer Richtung einer Querachse 4 fluchtend hintereinander ausgerichtet. Lotrecht zur Querachse 4 ist eine Tiefenachse 5 angeordnet. In Richtung der Tiefenachse 5 können mehrere Schaltfelder aufeinanderfolgend im Wesentlichen parallel zueinander ausgerichtet angeordnet sein (vgl. Fig. 4). Der erste Phasenblock 1 bildet einen frontseitigen Phasenblock. Der dritte Phasenblock 3 bildet einen endseitigen Phasenblock. Der zweite Phasenblock 2 ist zwischen frontseitigem ersten Phasenblock 1 und endseitigem dritten Phasenblock 3 angeordnet.

Beispielhaft wird nun zunächst anhand des ersten Phasenblockes 1 der Aufbau eines Phasenblockes wie in der Figur 1 gezeigt beschrieben. Der erste Phasenblock 1 weist ein vertikales Eingangsgehäusemodul 6 auf. Das vertikale Eingangsgehäusemodul 6 weist ein Eingangsgehäuse 7 auf. Das Eingangsgehäuse 7 ist im Wesentlichen hohlzylindrisch ausgeformt, wobei die Hohlzylinderachse in einer Vertikalen ausgerichtet ist. Das Eingangsgehäuse 6 weist dabei verschiedenartige Querschnitte auf. Stirnseitig ist das Eingangsgehäuse 7 jeweils mit einem Flansch 8 versehen. Am eingangsseitigen Ende des Eingangsgehäuses 7 ist ein Kabelanschluss 9 angeordnet. Der Kabelanschluss 9 führt ein Kabel 10 in das Innere des Eingangsgehäuses 7 ein. Der Kabelanschluss 9 ist dabei fluiddicht mit dem Flansch 8 des Eingangsgehäuses 7 verbunden und verschließt den Flansch 8 und damit das Eingangsgehäuse 7 fluiddicht. An den Kabelanschluss 9 schließt sich im Innern des Eingangsgehäusemodules 6 ein Phasenleiter 11 an. Der Phasenleiter 11 ist dabei ausgehend vom Kabelanschluss 9 in einer vertikalen Richtung durch den dortigen Flansch 8 bis zu einem Spannungswandlergehäusemodul 12 geleitet. Das Spannungswandlergehäusemodul 12 verschließt den dortigen stirnseitigen Flansch 8 fluiddicht. Im Innern des Spannungswandlergehäusemoduls 12 ist ein Spannungswandler angeordnet, welcher elektrische Spannungen auf dem Phasenleiter 11, der im Innern des vertikalen Eingangsgehäusemoduls 6 positioniert ist, misst und umsetzt. Mantelseitig ist in Höhe des Überganges vom Kabelanschluss 9 auf den Phasenleiter 11 des vertikalen Eingangsgehäusemoduls 6 ein erstes Erdungsschaltermodul 13 angeordnet. Das erste Erdungsschaltermodul 13 ist mantelseitig am Eingangsgehäuse 7 angeflanscht, wobei der entsprechende Flanschstutzen von dem ersten Erdungsschaltermodul 13 fluiddicht verschlossen ist. Im Innern des Eingangsgehäuses 7 ist ein bewegbares Schaltkontaktstück 13a des ersten Erdungsschaltermoduls 13 gelagert. Das bewegbare Schaltkontaktstück 13a des ersten Erdungsschaltermoduls 13 führt dauerhaft Erdpotenzial. Je nach Schaltzustand des ersten Erdungsschaltermoduls 13 ist das bewegbare Schaltkontaktstück 13a in eine Kontaktbuchse des Phasenleiters 11 des vertikalen Eingangsgehäusemodules 6 eingefahren oder von dieser elektrisch isoliert beabstandet. Entsprechend kann über das erste Erdungsschaltermodul 13 der Phasenleiter 11 des vertikalen Eingangsgehäusemodules 6 und damit der Kabelanschluss 9 nebst Kabel 10 geerdet werden. Weiterhin ist am Eingangsgehäuse 7 ein mantelseitiger Flansch 8 positioniert. Über den mantelseitigen Flansch 8 ist in Richtung der Querachse 4 fluchtend ein Quergehäusemodul 14 angeflanscht. Im Innern des Quergehäusemodules 14 ist ein Phasenleiter 15 angeordnet. Der Phasenleiter 15 ist über einen sogenannten Kabeltrenner 16, welcher den Übergang vom Phasenleiter 11 des vertikalen Eingangsgehäusemodules 6 zum Phasenleiter 15 des Quergehäusemodules 14 schaltet, elektrisch leitend kontaktierbar. Der Kabeltrenner 16 weist dazu ein bewegbares Schaltkontaktstück auf, welches ein Trennen oder Kontaktieren der Phasenleiter 11, 15 des vertikalen Eingangsgehäusemodules 6 sowie des Quergehäusemodules 14 ermöglicht. Das Quergehäusemodul 14 weist ein im Wesentlichen rohrförmiges rotationssymmetrisches Quergehäuse auf. Das Quergehäuse ist dabei fluchtend bzw. parallel zur Querachse 4 ausgerichtet. Vorliegend ist das Quergehäusemodul 14 dazu vorgesehen, einen Stromwandler zu tragen, um den Stromfluss durch den Phasenleiter 15 des Quergehäusemodules 14 zu messen. Dazu sind Messkerne 17 außenmantelseitig auf das Quergehäuse des Quergehäusemodules 14 aufgesetzt. So ist ein sogenannter außenliegender Wandler gebildet, da die Messkerne in der Umgebung, also außerhalb des vom Quergehäuse des Quergehäusemodules 14 umgrenzten Raumes liegt.

Über das Quergehäusemodul 14 ist das vertikale Eingangsgehäusemodul 6 mit einem vertikalen Schaltgehäusemodul 18 verbunden. Das vertikale Schaltgehäusemodul 18 weist ein Schaltgehäuse auf, welches im Wesentlichen hohlzylindrisch bzw. rotationssymmetrisch ausgebildet ist, wobei die Rotations- bzw. Hohlzylinderachse in einer Vertikalen ausgerichtet ist. Über einen Flansch 8 ist mantelseitig ein Verflanschen des Schaltgehäuses des vertikalen Schaltgehäusemodules 18 mit dem Quergehäusemodul 14 vorgesehen. Dadurch verbindet das Quergehäusemodul 14 das Eingangsgehäusemodul 6 mit dem Schaltgehäusemodul 18. Das Schaltgehäusemodul 18 sowie das Eingangsgehäusemodul 6 sind voneinander über das Quergehäuse 14 beabstandet, wobei das Schaltgehäusemodul 18 sowie das vertikale Eingangsgehäusemodul 6 fluchtend zueinander ausgerichtet sind, wobei die Rotationsachsen bzw. Hohlzylinderachsen parallel angeordnet sind. Das Quergehäusemodul 14 verläuft in Richtung der Querachse 4. In Richtung der Querachse 4 sind auch die drei Phasenblöcke 1, 2, 3 hintereinander fluchtend ausgerichtet.

Im Innern des vertikalen Schaltgehäusemodules 18 ist eine Unterbrechereinheit 19 eines Leistungsschalters angeordnet. Vorliegend ist die Unterbrechereinheit 19 des Leistungsschalters als Vakuumschaltröhre ausgeführt, in deren Inneren relativ zueinander bewegbare Schaltkontaktstücke eine Schaltstrecke bilden. Eingangsseitig ist die Unterbrechereinheit 19 des Leistungsschalters im Innern des Schaltgehäusemoduls 18 mit dem Phasenleiter 15 des Quergehäusemodules 14 dauerhaft elektrisch leitend verbunden. Diese Eingangsseite ist auch über ein zweites Erdungsschaltermodul 20 mit Erdpotenzial beaufschlagbar. Analog zum ersten Erdungsschaltermodul 13 weist das zweite Erdungsschaltermodul 20 ein bewegbares Schaltkontaktstück 20a auf. Das erste und das zweite Erdungsschaltermodul 13, 20 sind dabei in Richtung der Querachse 4 fluchtend zueinander ausgerichtet, wobei die bewegbaren Schaltkontaktstücke 13a, 20a in entgegengesetzter Richtung voneinander fortragen. Das bewegbare Schaltkontaktstück 20a im Innern des vertikalen Schaltgehäusemodules 18 ist in eine Kontaktbuchse des dortigen Phasenleiters auf der Eingangsseite der Unterbrechereinheit 19 einfahrbar bzw. von diesem elektrisch isolierbar, so dass über das zweite Erdungsschaltermodul 20 auch der Phasenleiter 15 des Quergehäusemoduls 14 erdbar ist.

In der Figur 1 ist im ersten Phasenblock 1 die Position des ersten Erdungsschaltermoduls 13 sowie des zweiten Erdungsschaltermodules 20 derart vorgenommen, dass die Erdungsschaltermodule 13, 20 von dem Quergehäusemodul überspannt sind. Am zweiten Phasenblock 2 sowie am dritten Phasenblock 3 der Figur 1 sind alternative Positionierungen von ersten und zweiten Erdungsschaltermodulen 13, 20 gezeigt. Elektrisch sind in allen drei Phasenblöcken 1, 2, 3 die gleichen Phasenleiter über die über das erste bzw. zweite Erdungsschaltermodul 13, 20 mit Erdpotential beaufschlagbar. Lediglich die Lage bzw. die Position der Einkopplung des Erdpotentiales variiert.

Am zweiten Phasenblock 2 ist beispielhaft die Positionierung von erstem Erdungsschaltermodul 13 und zweitem Erdungsschaltermodul 20 derart vorgenommen, dass diese am Quergehäusemodul 14 bzw. am Eingangsgehäusemodul 6 derart positioniert sind, dass diese oberhalb der Ebene des Quergehäusemodules 14 angeordnet sind. Dadurch ist der vom Quergehäusemodul 14 überspannte Raum von den Erdungsschaltermodulen 13, 20 freigehalten (vgl. Unterschied Figur 1, erster Phasenblock 1, zweiter Phasenblock 2). Dabei ist die Lage der Erdungsschaltermodule 13, 20 derart vorgenommen, dass die Bewegungsbahnen der bewegbaren Schaltkontaktstücke 13a, 20a im Wesentlichen lotrecht zueinander stehen.

Im dritten Phasenblock 3 der Figur 1 ist mit einer unterbrochenen Linie angedeutet, wo eine weitere Montage eines ersten bzw. zweiten Erdungsschaltermodules 13, 20 möglich ist. Am dritten Phasenblock 3 ist die Lage des ersten bzw. zweiten Erdungsschaltermodules 13, 20 derart gewählt, dass diese in der Ebene des Quergehäusemodules 14 liegend positioniert sind. D. h. vorliegend ragen die mit unterbrochener Linie dargestellten Erdungsschaltermodule 13, 20 des dritten Phasenblockes 3 aus der Zeichenebene dem Betrachter entgegen und spannen gemeinsam mit dem Quergehäusemodul 14 eine Ebene auf. Dabei ist vorteilhaft vorgesehen, dass die Bewegungsachsen der bewegbaren Schaltkontaktstücke 13a, 20a der beiden Erdungsschaltermodule 13, 20 im Wesentlichen parallel zueinander ausgerichtet ist. Die Bewegungsachsen der bewegbaren Schaltkontaktstücke 13a, 20a sind dabei im Wesentlichen parallel zur Tiefenachse 5 ausgerichtet.

Ausgangsseitig ist stirnseitig am Schaltgehäuse des vertikalen Schaltgehäusemodules 18 ein erstes Sammelschienengehäusemodul 21 angeordnet. Das erste Sammelschienengehäusemodul 21 weist ein Sammelschienengehäuse auf, welches ausgehend von der Ausgangsseite der Unterbrechereinheit 19 des Leistungsschalters einen ersten Sammelschienentrenner 22 aufweist. Über den ersten Sammelschienentrenner 22 ist die im Innern des ersten Sammelschienenmoduls 21 verlaufende erste Sammelschiene 23 mit der Ausgangsseite der Unterbrechereinheit 19 des Leistungsschalters elektrisch kontaktierbar. Der erste Sammelschienentrenner 22 weist dazu ein relativ bewegbares Trennerschaltkontaktstück auf.

Mantelseitig am Ausgang der Unterbrechereinheit 19 des Leistungsschalters ist am Schaltgehäuse des Schaltgehäusemoduls 18 ein Flansch 8 angeordnet, an welchem über ein Winkelerdungsmodul 24 ein zweites Sammelschienenmodul 25 mittelbar mit der Ausgangsseite der Unterbrechereinheit 19 des Leistungsschalters elektrisch verbindbar ist. Über einen zweiten Sammelschienentrenner 26 des zweiten Sammelschienenmoduls 25 mit entsprechendem bewegbaren Schaltkontaktstück ist die Sammelschiene des zweiten Sammelschienenmoduls 25 bedarfsweise mit der Ausgangsseite der Unterbrechereinheit 19 des Leistungsschalters elektrisch kontaktierbar. Die Sammelschienentrenner 22, 26 ermöglichen so ein wechselseitiges oder paralleles Kontaktieren der Sammelschienen 23, 27 mit der Ausgangsseite der Unterbrechereinheit 19 des Leistungsschalters. Über das Winkelerdungsmodul 24 ist über ein bewegbares Erdungskontaktstück des dortigen Winkelerders die Ausgangsseite der Unterbrechereinheit 19 des Leistungsschalters mit Erdpotenzial beaufschlagbar. Über die entsprechende Verschaltung kann so auch je nach Schaltzustand der beiden Sammelschienentrenner 22, 26 die erste Sammelschiene 23 und/oder die zweite Sammelschiene 27 geerdet werden.

Der erste Phasenblock 1 weist eine sogenannte einpolige (einphasige) Isolation auf. Im Innern der einzelnen Gehäusemodule ist jeweils lediglich ein Phasenleiter (ein Pol) angeordnet, welcher der Übertragung einer Phase eines dreiphasigen Elektroenergieübertragungssystems dient. Das jeweils im Innern der Gehäusemodule angeordnete elektrisch isolierende Fluid dient bevorzugt ausschließlich der elektrischen Isolation ein und desselben Phasenleiters innerhalb des jeweiligen Gehäusemoduls. Bedarfsweise können die einzelnen Gehäuse über insbesondere im Bereich der Flansche 8 angeordnete fluiddichte Barrieren voneinander separiert werden. Als fluiddichte Barrieren können beispielsweise in die Flansche eingelegte Scheibenisolatoren dienen, welche von dem Phasenleiter jeweils bevorzugt fluiddicht durchsetzt sind.

Beispielhaft wurde anhand des ersten Phasenblockes 1 dessen Aufbau beschrieben. Der zweite Phasenleiterblock 2 sowie der dritte Phasenleiterblock 3 weisen einen identischen Aufbau auf. Dabei ist jedes der entsprechenden Kabel 10 mit einer anderen elektrischen Phase beaufschlagt, so dass in jedem der Phasenblöcke 1, 2, 3 von ein und demselben Elektroenergieübertragungssystem eine unterschiedlich Spannung vorherrscht.

Am ersten Phasenblock 1, hier der frontseitige Phasenblock, ist ein Vorort-Steuerschrank 28 angeordnet. Der Vorort-Steuerschrank 28 ist dabei fluchtend in Richtung der Querachse mantelseitig vor dem vertikalen Schaltgehäusemodul 18 des ersten Phasenblockes 1 angeordnet. In dem Vorort-Steuerschrank 28 können beispielsweise Steuereinrichtungen, Messeinrichtungen, Regeleinrichtungen usw. aufgenommen werden.

Weiterhin ist eine Antriebseinrichtung 29, das Schaltgehäuse des vertikalen Schaltgehäusemodules 18 stirnseitig überdeckend, am ersten Phasenblock 1 angeordnet. Die Antriebseinrichtung 29 dient einem Antreiben der relativ zueinander bewegbaren Schaltkontaktstücke der Unterbrechereinheiten 19 des Leistungsschalters, die im Innern der Schaltgehäuse der vertikalen Schaltgehäusemodule 18 positioniert sind. Vorzugsweise kann die Antriebseinrichtung 29 mittels einer kinematischen Kette auch mit den Unterbrechereinheiten 19 des zweiten sowie dritten Phasenblockes 2, 3 zur Übertragung einer Antriebsenergie verbunden sein.

Analog zur Verwendung einer gemeinsamen Antriebseinrichtung 29 für alle Unterbrechereinheiten 19 der einzelnen Phasen des Leistungsschalters innerhalb des ersten, zweiten und dritten Phasenblockes 1, 2, 3 können zentrale Antriebseinrichtungen 29, 29a, 29b für die jeweils funktionsgleichen Unterbrechereinheiten (Leistungsschalter, Erdungsschalter, Trennschalter) eingesetzt werden, die jeweils über eine kinematische Kette, die im Wesentlichen in Richtung der Querachse verlaufen und die den ersten Phasenblock 1, den zweiten Phasenblock 2 sowie den dritten Phasenblock 3 miteinander verbinden, verwendet werden.

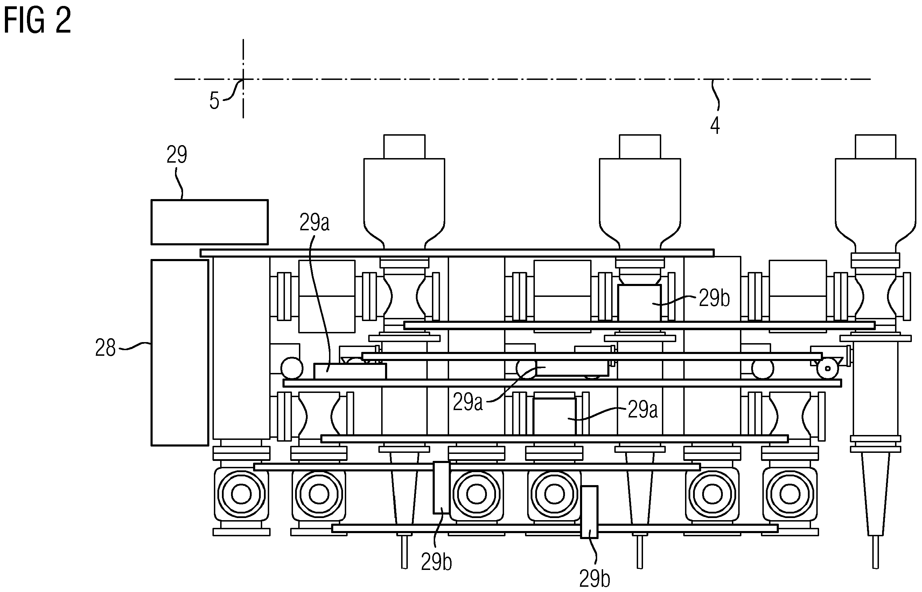

In der Figur 2 ist das aus der Figur 1 bekannte Schaltfeld in einer Seitenansicht gezeigt, wobei jeweils über entsprechende kinematische Ketten, die im Wesentlichen in Richtung der Querachse 4 verlaufen, jeweils eine Verbindung von einer Antriebseinrichtung 29, 29a, 29b zu den funktionsgleichen Unterbrechereinheiten des Leistungsschalters, Unterbrechereinheiten der Trennschalter, Unterbrechereinheiten der Erdungsschalter verlaufen. In der Figur 2 ist dann auch eine mögliche Transportausgestaltung eines Schaltfeldes gezeigt. Bedarfsweise können zum Transport die Spannungswandlergehäusemodule 12 demontiert werden, um die Höhe des Schaltfeldes zu reduzieren.

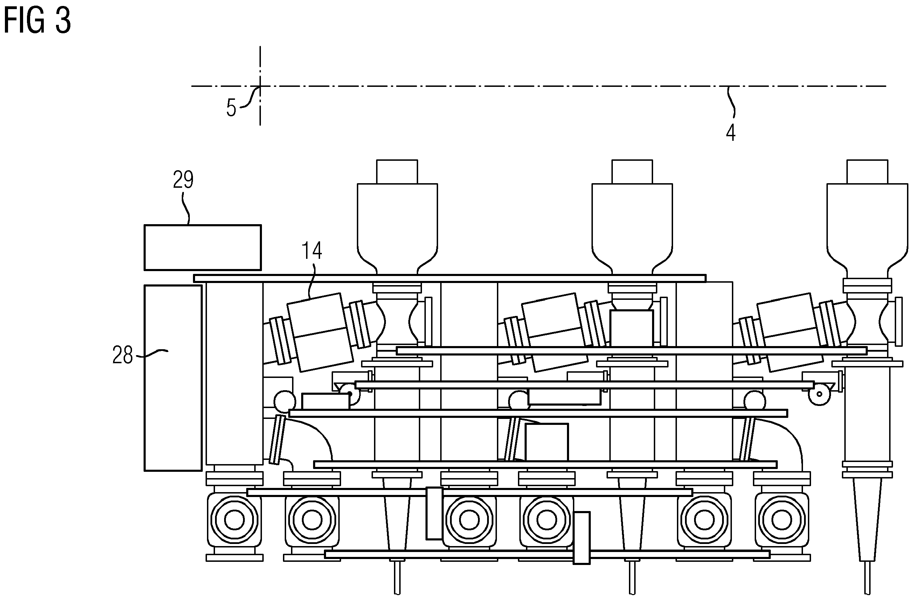

In der Figur 3 ist eine Abwandlung des aus der Figur 1 und 2 bekannten Schaltfeldes einer mehrphasigen Schaltanlage gezeigt. Dort ist die Nutzung von schräg angeordneten Stutzen bzw. Quergehäusemodulen 14 beschrieben, wodurch im Richtung der Querachse 4 ein verkürzter Aufbau des Schaltfeldes ermöglicht ist.

Die Figur 4 zeigt eine frontale Ansicht der aus den Figuren 1, 2 und 3 bekannten Schaltfelder, die eine Schaltanlage bilden. Die Figur 4 zeigt in frontaler Ansicht ein erstes Schaltfeld 30, ein zweites Schaltfeld 31, ein drittes Schaltfeld 32, ein viertes Schaltfeld 33, ein fünftes Schaltfeld 34 sowie ein sechstes Schaltfeld 35. Der in der Figur 4 dem Betrachter zugewandte Abschnitt der Schaltfelder 30, 31, 32, 33, 34, 35 entspricht dem frontseitigen Ende des jeweils ersten Phasenblockes 1 des jeweiligen Schaltfeldes 30, 31, 32, 33, 34, 35. Jeweils zwei Schaltfelder 30, 31; 32, 33; 34, 35 sind miteinander unmittelbar über die jeweiligen ersten Sammelschienenmodule 21 sowie die dahinterliegenden zweiten Sammelschienenmodule 22 miteinander verflanscht, so dass die einzelnen vertikalen Schaltgehäusemodule 18 über ein entsprechendes Schalten bzw. Trennen der ersten sowie zweiten Sammelschienentrenner 22, 26 miteinander elektrisch verbunden werden können. Entsprechend können jeweils die an den fluchtend in Richtung der Querachse 4 liegenden Kabeln 10 der verschiedenen Schaltfelder 30, 31, 32, 33, 34, 35 miteinander verschaltet werden. Um eine vereinfachte Montage bzw. einen verbesserten Service in Richtung der Querachse 4 an den Schaltfeldern bzw. den einzelnen Phasenblöcken 1, 2, 3 der Schaltfelder 30, 31, 32, 33, 34, 35 zu ermöglichen, sind zwischen jedem zweiten Schaltfeld 31, 32, 33, 34 Sammelschienendistanzmodule 36 angeordnet. Die Sammelschienendistanzmodule 36 führen im Innern die Sammelschienen 23, 26 zwischen den entsprechenden Sammelschienenmodulen 21, 25 fort. Die Beabstandung jedes zweiten Schaltfeldes 31, 32, 33, 34 ermöglicht weiterhin eine vereinfachte Positionierung von kinematischen Ketten, um eine Bewegung von einer zentralen Antriebseinrichtung 29 in Richtung der Querachse 4 verteilt übertragen zu können.

## Patentansprüche

1. Mehrphasige Schaltanlage mit einem Schaltfeld (30, 31, 32, 33, 34, 35) aufweisend ein vertikales Eingangsgehäusemodul (6), welches über ein Quergehäusemodul (14) mit einem vertikalen Schaltgehäusemodul (18) verbunden ist, wobei das Eingangsgehäusemodul (6) und das Schaltgehäusemodul (18) in Richtung des Quergehäusemoduls (14) voneinander beabstandet sind und das Eingangsgehäusemodul (6), das Quergehäusemodul (14) und das Schaltgehäusemodul (18) einen ersten Phasenblock (1) bilden,
**dadurch gekennzeichnet, dass**
mehrere Phasenblöcke (1, 2, 3) in Richtung des Quergehäuses (14) hintereinander liegend angeordnet sind.

2. Mehrphasige Schaltanlage mit einem Schaltfeld (30, 31, 32, 33, 34, 35) nach Anspruch 1,
**dadurch gekennzeichnet, dass**
die Phasenblöcke (1, 2, 3) im Wesentlichen gleichartig aufgebaut sind.

3. Mehrphasige Schaltanlage mit einem Schaltfeld (30, 31, 32, 33, 34, 35) nach Anspruch 1 oder 2,
**dadurch gekennzeichnet, dass**
mehrere Phasenblöcke (1, 2, 3) parallel zum Quergehäuse (14) angeordnet sind.

4. Mehrphasige Schaltanlage mit einem Schaltfeld (30, 31, 32, 33, 34, 35) nach einem der Ansprüche 1 bis 3,
**dadurch gekennzeichnet, dass**
stirnseitig am Schaltgehäusemodul (18), insbesondere vom Schaltgehäusemodul (18) überdeckt, ein Sammelschienengehäusemodul (21) angeordnet ist.

5. Mehrphasige Schaltanlage mit einem Schaltfeld (30, 31, 32, 33, 34, 35) nach einem der Ansprüche 1 bis 4,
**dadurch gekennzeichnet, dass**
mantelseitig am Schaltgehäusemodul (18) ein Sammelschienengehäusemodul (25) angeordnet ist.

6. Mehrphasige Schaltanlage mit einem Schaltfeld (30, 31, 32, 33, 34, 35) nach einem der Ansprüche 1 bis 5,
**dadurch gekennzeichnet, dass**
an einem frontseitigen Schaltgehäusemodul (18) eine Antriebseinrichtung (21) angeordnet ist, wobei die Antriebseinrichtung (21) an Unterbrechereinheiten (19) von in Richtung des Quergehäuses (14) hintereinander liegenden Schaltgehäusemodulen (18) gekoppelt ist.

7. Mehrphasige Schaltanlage mit einem Schaltfeld (30, 31, 32, 33, 34, 35) nach einem der Ansprüche 1 bis 6,
**dadurch gekennzeichnet, dass**
an einem frontseitigen Schaltgehäusemodul (18) eine Antriebseinrichtung (21) angeordnet ist, welche das Schaltgehäusemodul (18) zumindest teilweise überdeckt.

8. Mehrphasige Schaltanlage mit einem Schaltfeld (30, 31, 32, 33, 34, 35) nach einem der Ansprüche 1 bis 7,
**dadurch gekenzeichnet**, dass
am Schaltgehäusemodul (18) und/oder am Quergehäusemodul (14) und/oder am Eingangsgehäusemodul (6) ein Erdungsschaltermodul (13, 20) anordnet ist, welches von dem Quergehäusemodul (14) überspannt ist.

9. Mehrphasige Schaltanlage mit einem Schaltfeld (30, 31, 32, 33, 34, 35) nach einem der Ansprüche 1 bis 8,
**dadurch gekennzeichnet, dass**
am Schaltgehäusemodul (18) und/oder am Eingangsgehäusemodul (6) und/oder am Quergehäusemodul (14) ein Erdungsschaltermodul (13, 20) angeordnet ist, welches sich oberhalb des Quergehäusemoduls (14) erstreckt.

10. Mehrphasige Schaltanlage mit einem Schaltfeld (30, 31, 32, 33, 34, 35) nach einem der Ansprüche 1 bis 9,
**dadurch gekennzeichnet, dass**
am Schaltgehäusemodul (18) und/oder am Eingangsgehäusemodul (6) und/oder am Quergehäusemodul (14) ein Erdungsschaltermodul (13, 20) angeordnet ist, welches sich in der Ebene des Quergehäusemoduls (14) erstreckt.

11. Mehrphasige Schaltanlage mit einem Schaltfeld (30, 31, 32, 33, 34, 35) nach einem der Ansprüche 1 bis 10,
**dadurch gekennzeichnet, dass**
eine Unterbrechereinheit (19) eine Schaltstrecke eines Leistungsschalters bildet.

12. Mehrphasige Schaltanlage mit einem Schaltfeld (30, 31, 32, 33, 34, 35) nach einem der Ansprüche 1 bis 11,
**dadurch gekennzeichnet, dass**
eine Unterbrechereinheit (19) eine Schaltstrecke eines Trennschalters (16, 22, 26) bildet.

13. Mehrphasige Schaltanlage mit einem Schaltfeld (30, 31, 32, 33, 34, 35) nach einem der Ansprüche 1 bis 12,
**dadurch gekennzeichnet, dass**
eine Unterbrechereinheit (19) eine Schaltstrecke eines Erdungsschalters (13, 20, 24) bildet.

14. Mehrphasige Schaltanlage mit einem Schaltfeld (30, 31, 32, 33, 34, 35) nach einem der Ansprüche 1 bis 13,
**dadurch gekennzeichnet, dass**
Gehäusemodule (6, 14, 18, 21, 24) über Schnittstellen, insbesondere Flansche (8) mittelbar oder unmittelbar miteinander verbunden sind.

## Claims

1. Multiphase switchgear having a switch panel (30, 31, 32, 33, 34, 35) having a vertical input housing module (6) that is connected to a vertical switch housing module (18) via a transverse housing module (14), wherein the input housing module (6) and the switch housing module (18) are spaced from one another in the direction of the transverse housing module (14), and the input housing module (6), the transverse housing module (14) and the switch housing module (18) form a first phase block (1),
**characterized in that**
a plurality of phase blocks (1, 2, 3) are arranged situated in a row in the direction of the transverse housing (14).

2. Multiphase switchgear having a switch panel (30, 31, 32, 33, 34, 35) according to Claim 1,
**characterized in that**
the phase blocks (1, 2, 3) have a substantially identical construction.

3. Multiphase switchgear having a switch panel (30, 31, 32, 33, 34, 35) according to Claim 1 or 2,
**characterized in that**
a plurality of phase blocks (1, 2, 3) are arranged parallel to the transverse housing (14).

4. Multiphase switchgear having a switch panel (30, 31, 32, 33, 34, 35) according to one of Claims 1 to 3,
**characterized in that**
a busbar housing module (21) is arranged on the end face of the switch housing module (18), in particular in a manner covered by the switch housing module (18).

5. Multiphase switchgear having a switch panel (30, 31, 32, 33, 34, 35) according to one of Claims 1 to 4,
**characterized in that**
a busbar housing module (25) is arranged on a side face of the switch housing module (18).

6. Multiphase switchgear having a switch panel (30, 31, 32, 33, 34, 35) according to one of Claims 1 to 5,
**characterized in that**
a drive device (21) is arranged on a front-side switch housing module (18), wherein the drive device (21) is coupled to breaker units (19) of switch housing modules (18) situated in a row in the direction of the transverse housing (14).

7. Multiphase switchgear having a switch panel (30, 31, 32, 33, 34, 35) according to one of Claims 1 to 6,
**characterized in that**
a drive device (21) is arranged on a front-side switch housing module (18) and at least partially covers the switch housing module (18).

8. Multiphase switchgear having a switch panel (30, 31, 32, 33, 34, 35) according to one of Claims 1 to 7,
**characterized in that**
a grounding switch module (13, 20), which is straddled by the transverse housing module (14), is arranged on the switch housing module (18) and/or on the transverse housing module (14) and/or on the input housing module (6).

9. Multiphase switchgear having a switch panel (30, 31, 32, 33, 34, 35) according to one of Claims 1 to 8,
**characterized in that**
a grounding switch module (13, 20), which extends above the transverse housing module (14), is arranged on the switch housing module (18) and/or on the input housing module (6) and/or on the transverse housing module (14).

10. Multiphase switchgear having a switch panel (30, 31, 32, 33, 34, 35) according to one of Claims 1 to 9,
**characterized in that**
a grounding switch module (13, 20), which extends in the plane of the transverse housing module (14), is arranged on the switch housing module (18) and/or on the input housing module (6) and/or on the transverse housing module (14).

11. Multiphase switchgear having a switch panel (30, 31, 32, 33, 34, 35) according to one of Claims 1 to 10,
**characterized in that**
a breaker unit (19) forms a switching path of a power switch.

12. Multiphase switchgear having a switch panel (30, 31, 32, 33, 34, 35) according to one of Claims 1 to 11,
**characterized in that**
a breaker unit (19) forms a switching path of a circuit breaker (16, 22, 26).

13. Multiphase switchgear having a switch panel (30, 31, 32, 33, 34, 35) according to one of Claims 1 to 12,
**characterized in that**
a breaker unit (19) forms a switching path of a grounding switch (13, 20, 24).

14. Multiphase switchgear having a switch panel (30, 31, 32, 33, 34, 35) according to one of Claims 1 to 13,
**characterized in that**
housing modules (6, 14, 18, 21, 24) are connected to one another directly or indirectly via interfaces, in particular flanges (8) .

## Revendications

1. Appareillage de distribution polyphasé comprenant un panneau (30, 31, 32, 33, 34, 35) de distribution comportant un module (6) de boîtier vertical d'entrée, qui est assemblé à un module (18) vertical de boîtier de distribution par un module (14) de boîtier transversal, dans lequel le module (6) de boîtier d'entrée et le module (18) de boîtier de distribution sont à distance l'un de l'autre dans la direction du module (14) de boîtier transversal et le module (6) de boîtier d'entrée, le module (14) de boîtier transversal et le module (18) de boîtier de distribution forment un premier bloc (1) de phase,
**caractérisé en ce que**
plusieurs blocs (1, 2, 3) de phase sont disposés les uns derrière les autres dans la direction du boîtier (14) transversal.

2. Appareillage de distribution polyphasé comprenant un panneau (30, 31, 32, 33, 34, 35) de distribution suivant la revendication 1,
**caractérisé en ce que**
les blocs (1, 2, 3) de phase sont construits sensiblement de la même façon.

3. Appareillage de distribution polyphasé comprenant un panneau (30, 31, 32, 33, 34, 35) de distribution suivant la revendication 1 ou 2,
**caractérisé en ce que**
plusieurs blocs (1, 2, 3) de phase sont montés en parallèle au boîtier (14) transversal.

4. Appareillage de distribution polyphasé comprenant un panneau (30, 31, 32, 33, 34, 35) de distribution suivant l'une des revendications 1 à 3,
**caractérisé en ce qu'**
un module (21) de boîtier de barre collectrice est disposé du côté frontal du module (18) de boîtier de distribution, en étant, en particulier, recouvert par le module (18) de boîtier de distribution.

5. Appareillage de distribution polyphasé comprenant un panneau (30, 31, 32, 33, 34, 35) de distribution suivant l'une des revendications 1 à 4,
**caractérisé en ce qu'**
un module (25) de boîtier de barre collectrice est disposé du côté de la surface latérale du module (18) de boîtier de distribution.

6. Appareillage de distribution polyphasé comprenant un panneau (30, 31, 32, 33, 34, 35) de distribution suivant l'une des revendications 1 à 5,
**caractérisé en ce qu'**
un dispositif (21) d'entraînement est disposé sur un module (18) de boîtier de distribution du côté avant, le dispositif (21) d'entraînement étant accouplé à des unités (19) d'interruption de modules (18) de boîtier de distribution, qui sont les uns derrière les autres dans la direction du boîtier (14) transversal.

7. Appareillage de distribution polyphasé comprenant un panneau (30, 31, 32, 33, 34, 35) de distribution suivant l'une des revendications 1 à 6,
**caractérisé en ce que**,
sur un module (18) de boîtier de distribution du côté avant est disposé un dispositif (21) d'entraînement, qui recouvre au moins en partie le module (18) de boîtier de distribution.

8. Appareillage de distribution polyphasé comprenant un panneau (30, 31, 32, 33, 34, 35) de distribution suivant l'une des revendications 1 à 7,
**caractérisé en ce que**,
sur le module (18) de boîtier de distribution et/ou sur le module (14) de boîtier transversal et/ou sur le module (6) de boîtier d'entrée est disposé un module (13, 20) d'interrupteur de mise à la terre, qui est recouvert du module (14) de boîtier transversal.

9. Appareillage de distribution polyphasé comprenant un panneau (30, 31, 32, 33, 34, 35) de distribution suivant l'une des revendications 1 à 8,
**caractérisé en ce que**,
sur le module (18) de boîtier de distribution et/ou sur le module (6) de boîtier d'entrée et/ou sur le module (14) de boîtier transversal est disposé un module (13, 20) d'interrupteur de mise à la terre, qui s'étend au-dessus du module (14) de boîtier transversal.

10. Appareillage de distribution polyphasé comprenant un panneau (30, 31, 32, 33, 34, 35) de distribution suivant l'une des revendications 1 à 9,
**caractérisé en ce que**,
sur le module (18) de boîtier de distribution et/ou sur le module (6) de boîtier d'entrée et/ou sur le module (14) de boîtier transversal est disposé un module (13, 20) d'interrupteur de mise à la terre, qui s'étend dans le plan du module (14) de boîtier transversal.

11. Appareillage de distribution polyphasé comprenant un panneau (30, 31, 32, 33, 34, 35) de distribution suivant l'une des revendications 1 à 10,
**caractérisé en ce qu'**
une unité (19) d'interruption forme un espace de coupure d'un disjoncteur.

12. Appareillage de distribution polyphasé comprenant un panneau (30, 31, 32, 33, 34, 35) de distribution suivant l'une des revendications 1 à 11,
**caractérisé en ce que**
l'unité (19) d'interruption forme un espace de coupure d'un sectionneur (16, 22, 26).

13. Appareillage de distribution polyphasé comprenant un panneau (30, 31, 32, 33, 34, 35) de distribution suivant l'une des revendications 1 à 12,
**caractérisé en ce qu'**
une unité (19) d'interruption forme un espace de coupure d'un interrupteur (13, 20, 24) de mise à la terre.

14. Appareillage de distribution polyphasé comprenant un panneau (30, 31, 32, 33, 34, 35) de distribution suivant l'une des revendications 1 à 13,
**caractérisé en ce que**
des modules (6, 14, 18, 21, 24) de boîtier sont assemblés entre eux directement ou indirectement par des interfaces, en particulier par des brides (8).
